# EUROPEAN PATENT APPLICATION

(11) **EP 2 139 238 A1**
(43) Date of publication of application: **30.12.2009**
(21) Application number: 08159037.4
(22) Date of filing: 25.06.2008
(51) Int. Cl.: H04N 7/24, H04N 7/26

(54) **Multiple description coding based method, system, and receiver for wireless video broadcasting**

(71) Applicant: TELEFONAKTIEBOLAGET LM ERICSSON (publ), 164 83 Stockholm (SE)
(72) Inventor: Wilhelmsson, Leif, SE-240 10, DALBY (SE); Lindoff, Bengt, 237 36, BJÄRRED (SE); Persson, Joakim, 246-57 Barsebäck (SE); Rosenqvist, Anders, SE-247 33, SÖDRA SANDBY (SE)
(74) Representative: Andersson, Björn E.

(57) **Abstract**

A method of broadcasting a data stream associated with a service is disclosed. The method comprises splitting the data stream into a plurality of different self-contained sub-streams, and transmitting each of the sub-streams using a respective transmission resource, wherein a first transmission resource used to transmit a first of the sub-streams is different from a second transmission resource used to transmit a second of the sub-streams. A method for use in a wireless communication receiver is also disclosed. The method comprises receiving two or more different self-contained sub-streams related to a same broadcast service, and processing two or more of the received two or more sub-streams and combining the result. Corresponding system, receiver and computer program products are also disclosed.

## Description

### Technical Field

The present invention relates generally to the field of data stream broadcasting.

### Background

Capability to receive broadcast data may be implemented in wireless communication devices, such as, for example, mobile telephones, communicators, smartphones, and laptops. There exist a variety of different flavors of broadcast technologies and a wireless communication device may be capable to receive broadcast data according to one or more of these different broadcast technologies.

One such broadcast technology, developed within a traditional cellular communication standard environment, is denoted Multimedia Broadcast and Multicast Services (MBMS). Another broadcast technology, used for broadcast to wireless communication devices such as mobile telephones, has emerged from the European broadcast standard for terrestrial television, denoted Digital Video Broadcast - Terrestrial (DVB-T). The version of this standard suitable for broadcast to wireless communication devices is denoted Digital Video Broadcast - Handheld (DVB-H).

Broadcast transmission to wireless communication devices differs in several ways from point-to-point transmission, which is used for e.g. voice traffic and data traffic. One difference is that it is much more difficult, if not impossible, to achieve a similar quality-of service (QoS). Power control is commonly used for point-to-point transmission in cellular systems. A purpose of power control is to ensure that a certain reliability of the received signal is obtained. This reliability should be obtained without using too much transmission power and without causing more interference for other users (i.e. other wireless communication devices) than necessary. In addition to power control, many point-to-point transmission technologies utilize automatic repeat request (ARQ). With ARQ, data may be re-transmitted if it is not received correctly. For broadcast transmission, neither power control nor ARQ are available. Thus, the receiving conditions for receivers of a specific broadcast transmission are generally quite different as the receivers usually experience different radio channel conditions.

Therefore, it might be desirable to implement functionality, associated with the various broadcast standards, that addresses the situation that the reception reliability might be very different for different receivers of the broadcast data.

In DVB-T, a concept called hierarchical modulation is used. This concept enables support of receivers having access to a rooftop antenna pointing towards the transmitter as well as support of receivers with a much smaller antenna that might point in an arbitrary direction. In hierarchical modulation, the same information is transmitted in parallel, but a different number of bits (for instance, corresponding to different resolution for a video service) may be used by a receiver to demodulate and decode the information. For instance, if 64-QAM (Quadrature Amplitude Modulation) is used (i.e., each symbol carries 6 bits), the two most reliable bits (the bits determining which of the quadrants of the IQ-plane (In-phase/Quadrature-plane) the symbol belongs to) may be intended for receives that may be expected to experience more or less poor reception conditions, e.g. portable receivers. The other four bits of a 64-QAM symbol, which require much higher signal-to-noise ratio (SNR) to be properly demodulated, may be intended for stationary receivers having access to an antenna with a considerable antenna gain.

In the broadcast standard Forward Link Only (FLO), the situation is also addressed, that the reception conditions can be quite different for different receivers. FLO employs a concept called layered modulation. Layered modulation may be viewed as an elaboration of hierarchical modulation. In layered modulation, the information is encoded to ensure that a base layer is more robust and may be received, demodulated and decoded also under relatively poor channel conditions. If the channel conditions are good, then an enhancement layer may be received, demodulated and decoded in addition to the base layer, which may result in a higher quality of the service. An advantage of layered modulation compared to hierarchical modulation is that the robust bits of the base layer are useful also for the high-quality service.

Many broadcast networks are so-called Single Frequency Networks (SFN). In single frequency networks, the same broadcast signal is transmitted by a multitude of broadcast transmitters. By having a stringent time-synchronization between the transmitters, the signals from the different transmitters may add constructively as long as the difference in propagation delay from the different transmitters to the receiver can be handled. An advantage with single frequency networks is that services can be provided using only one carrier frequency, which implies that the spectrum efficiency is high. Orthogonal Frequency Division Multiplexing (OFDM) is particularly suitable for SFN operation. For OFDM, the signals from the different transmitters will add constructively as long as the difference in propagation delay can be handled by the cyclic prefix (CP).

Practical limitations may exist for how large geographical area a SFN can cover. When the geographical area of a SFN is increased, the propagation delay from the different transmitters will eventually be too large. Although signals with large delays will typically be much weaker at a receiver, it may not be possible to guarantee the signal reliability.

Another broadcast network type is Multi-Frequency Networks (MFN). In multi-frequency networks, several different carrier frequencies are used to transmit the same service. A MFN may be suitable for covering large geographical areas. Different geographical sub-areas are allocated different carrier frequencies (much like cell planning in some cellular system for wireless communication, e.g. GSM). Which carrier frequency the receiver decides to listen to may depend on which of the carrier frequencies is received with the highest reliability. It is understood that a receiver might be located such that only one of the carrier frequencies can be received or a receiver might be located such that two or more carrier frequencies can be received with high enough reliability.

Both DVB-T and FLO have mechanisms for achieving better broadcast service when the circumstances allow. However, neither these nor other technologies address the problem of achieving better broadcast service when the same service is broadcast using different transmission resources, e.g. when the same service is broadcast on different carriers from different transmitters as in MFN.

Therefore, there is a need for improved methods, systems and receivers for data stream broadcast.

### Summary

It should be emphasized that the term "comprises/comprising" when used in this specification is taken to specify the presence of stated features, integers, steps, or components, but does not preclude the presence or addition of one or more other features, integers, steps, components, or groups thereof.

It is an object of the invention to obviate at least some of the above disadvantages and to provide improved methods, systems and receivers for broadcasting a data stream.

According to a first aspect of the invention, this is achieved by a method of broadcasting a data stream associated with a service, suitable for use in a wireless communication system. The method comprises splitting the data stream into a plurality of different self-contained sub-streams, and transmitting each of the sub-streams using a respective transmission resource, wherein a first transmission resource used to transmit a first of the sub-streams is different from a second transmission resource used to transmit a second of the sub-streams.

In some embodiments, the method may further comprise modulating and encoding each of the sub-streams independently.

In some embodiments, the data stream may have a first quality, each of the plurality of sub-streams may have a sub-stream specific quality, and each of the sub-stream specific qualities may be lower than the first quality.

In some embodiments, the first of the plurality of sub-streams may be transmitted from a first broadcasting site and the second of the plurality of sub-streams may be transmitted from a second broadcasting site, the first and second broadcasting sites being geographically separated.

In some embodiments, the respective transmission resources may comprise at least one of a frequency range and a time slot.

In some embodiments, the method may further comprise synchronizing the plurality of sub-streams before transmission.

In some embodiments, the service may be a video service and the data stream may be a video stream comprising I-frames and P-frames. The step of splitting the data stream into the plurality of different self-contained sub-streams may comprise letting each I-frame be comprised in each of the sub-streams, and letting each P-frame be comprised in only one of the sub-streams.

In some embodiments, the service may be a video service and the data stream may be a video stream having a first resolution. The step of splitting the data stream into the plurality of different self-contained sub-streams may comprise letting each of the sub-streams have a sub-stream specific resolution wherein each of the sub-stream specific resolutions is lower than the first resolution.

A second aspect of the invention is a computer program product comprising a computer readable medium, having thereon a computer program comprising program instructions, the computer program being loadable into a data-processing unit and adapted to cause the data-processing unit to execute method steps according to the first aspect of the invention when the computer program is run by the data-processing unit.

A third aspect of the invention is a method, suitable for use in a wireless communication receiver. The method comprises receiving two or more different self-contained sub-streams related to a same broadcast service, and processing two or more of the received two or more sub-streams and combining the result.

In some embodiments, the method may further comprise determining whether to combine sub-streams or not, processing only one of the received two or more sub-streams if it is determined to not combine sub-streams and processing two or more of the received two or more sub-streams and combining the result if it is determined to combine sub-streams.

In some embodiments, the step of combining two or more of the two or more sub-streams may comprise interlacing elements of the two or more sub-streams.

In some embodiments, the method may further comprise determining the number of sub-streams of the received two or more sub-streams to be used in the step of processing and combining based on at least one of: a receiver capability of the wireless communication receiver, an availability of receiver processing chains of the wireless communication receiver, reception conditions experienced by the wireless communication receiver, a desired data quality, and a desired power consumption of the wireless communication receiver.

A fourth aspect of the invention is a computer program product comprising a computer readable medium, having thereon a computer program comprising program instructions, the computer program being loadable into a data-processing unit and adapted to cause the data-processing unit to execute method steps according to the third aspect of the invention when the computer program is run by the data-processing unit.

A fifth aspect of the invention is a system for broadcasting a data stream associated with a service. The system comprises a control unit adapted to split the data stream into a plurality of different self-contained sub-streams, and at least one transmitter, each adapted to transmit at least one of the sub-streams using a respective transmission resource, wherein a first transmission resource used to transmit a first of the sub-streams is different from a second transmission resource used to transmit a second of the sub-streams.

In some embodiments, the at least one transmitter may comprise at least a first transmitter of a first broadcasting site and a second transmitter of a second broadcasting site, the first and second broadcasting sites being geographically separated. The first transmitter may be adapted to transmit the first of the plurality of sub-streams and the second transmitter may be adapted to transmit the second of the plurality of sub-streams.

In some embodiments, the control unit may be further adapted to synchronize the plurality of sub-streams.

In some embodiments, the system is compliant with at least one of Digital Video Broadcasting - Handheld (DVB-H), Multimedia Broadcast Multicast Service (MBMS) and evolved versions thereof.

A sixth aspect of the invention is a receiver comprising one or more receiver front ends adapted to receive two or more different self-contained sub-streams related to a same broadcast service, at least one processing chain, each adapted to process at least one of the two or more sub-streams, combining circuitry adapted to combine two or more sub-streams to produce a combined data stream, and a control unit adapted to control operation of the at least one processing chain and the combining circuitry.

In some embodiments, the at least one processing chain may comprise at least two processing chains, each adapted to process one of the two or more sub-streams.

In some embodiments, the receiver may further comprise decision circuitry adapted to determine whether to combine sub-streams or not. The control unit may be adapted to control operation of the at least one processing chain and the combining circuitry in response to a decision by the decision circuitry.

A seventh aspect of the invention is an electronic apparatus comprising the receiver according to the sixth aspect of the invention.

In some embodiments, the electronic apparatus may be compliant with at least one of Digital Video Broadcasting - Handheld (DVB-H), Multimedia Broadcast Multicast Service (MBMS) and evolved versions thereof.

In some embodiments, the third, fifth and sixth aspects of the invention may additionally have features identical with or corresponding to any of the various features as explained above for the first aspect of the invention. In some embodiments, the sixth aspect of the invention may additionally have features identical with or corresponding to any of the various features as explained above for the third or fifth aspects of the invention.

The word quality is herein defined as a property of a data stream or of a sub-stream, while the word reliability is herein defined as a property related to channel conditions. The quality may depend on the amount of data compression of the stream or sub-stream. The amount of quality may manifest itself as a more or less excellent result of an application provided by the broadcast service. The quality may, for example, be in terms of a frame rate or a resolution if the service is a video service.

An advantage of some embodiments of the invention is that flexible broadcasting is provided for.

Another advantage of some embodiments of the invention is that robust broadcasting is provided for.

Another advantage of some embodiments of the invention is that a broadcast approach is provided for that is robust when the reception conditions are poor.

Another advantage of some embodiments of the invention is that a broadcast approach is provided for that supply high quality data when the reception conditions are good.

Another advantage of some embodiments of the invention is that a broadcast approach is provided for where the quality of the supplied data is related to the reception conditions.

Another advantage of some embodiments of the invention is that a decision regarding which data quality is to be achieved may be taken at a receiver of the data.

Another advantage of some embodiments of the invention is that the decision regarding which data quality is to be achieved may be taken at the receiver based on receiver capabilities and/or availability of receiver circuitry.

Another advantage of some embodiments of the invention is that a receiver of a broadcast application may trade off power consumption and data stream quality by choosing a suitable number of broadcast streams to decode and combine.

Another advantage of some embodiments of the invention is that a broadcast approach for scalable quality can be introduced in a system such that it is backwards compatible. Backward compatibility may imply that receivers, which are not capable of improving the quality by using two or more broadcast streams according to embodiments of the invention, are still able to receive with the quality obtained from using a single broadcast stream.

### Brief Description of the Drawings

Further objects, features and advantages of the invention will appear from the following detailed description of embodiments of the invention, with reference being made to the accompanying drawings, in which:
Fig. 1 is a flowchart illustrating example method steps according to some embodiments of the invention;
Fig. 2 is a flowchart illustrating example method steps according to some embodiments of the invention;
Fig. 3 is a block diagram illustrating an example arrangement according to some embodiments of the invention; and
Fig. 4 is a schematic drawing illustrating a mobile terminal connected, through radio links, to a communication network, wherein the mobile terminal and/or the communication network may comprise arrangements according to some embodiments of the invention.

### Detailed Description

In many receivers for emerging and future standards, several receiver processing chains will be available to enable efficient use of the wireless medium. Examples of such standards are IMT-advanced (International Mobile Telecommunications - advanced), UMTS LTE (Universal Mobile Telecommunication Standard - Long Term Evolution), MC-HSPA (Multi Carrier High Speed Packet Access), MC-WCDMA (Multi Carrier Wideband Code Division Multiple Access), DVB-T2 (Digital Video Broadcast - Terrestrial, second generation) and DVB-NGH (Digital Video Broadcast - Next Generation Handheld). Receivers for future standards may also be able to simultaneously receive signals that are transmitted at different carrier frequencies. A reason why this may be required is that as the system bandwidth is increased in future standards it might not be possible to find a continuous spectrum covering the entire bandwidth. In such cases, it may be necessary to resort to so-called fragmented spectrum.

Even if the maximum data rate that can be supported in future systems increases, there may still be devices that only support a small fraction of the maximum data rate (for example, devices only supporting voice services). To reflect that there are different needs and requirements for different devices, the concept of User Equipment (UE) classes has been introduced. It may be expected that, in future standards, UE classes range from relatively simple devices (with low processing capability, a relatively small display, etc) to devices built into computers (with several receiver processing chains as explained above, etc). Thus, it is believed that future digital implementations will allow for very computationally complex operations in receivers (e.g. processing large amounts of data), many of which are not feasible today.

The receiver capability may be used to increase the SNR achieved at the receiver and to provide for a flexible and robust broadcast technique. In the following, embodiments of the invention will be described where a data stream, associated with a broadcast service, is split into two or more sub-streams. The data stream may be a high quality data stream and the sub-streams may have lower quality than the high-quality data stream. Each sub-stream may then be transmitted using a respective transmission resource, different for each sub-stream. The respective transmission resource may, for example, be a carrier frequency or a time slot. The different sub-streams may also be broadcast from different geographical sites.

Each of the sub-streams is self-contained, meaning that it can be received and demodulated/decoded separately. However, it can also be combined with one or more of the other sub-streams to enhance the data quality. Thus, if reception conditions are poor, if a receiver is only capable of receiving one sub-stream at a time, and/or if a receiver is at a location where it is reached by only one sub-stream, the receiver may demodulate only one sub-stream and still be able to receive acceptable broadcast service. On the other hand, if reception conditions are good, if a receiver is capable of receiving more than one sub-stream simultaneously, and if a receiver is at a location where it is reached by more than one sub-stream, the receiver may demodulate two or more sub-streams, combine the result, and thus be able to receive high quality broadcast service. The quality of the broadcast service may be higher when sub-streams are combined than when a sub-stream is taken separately. Combining two or more sub-streams may comprise interlacing elements of each of the sub-streams. In some embodiments, a trade-off between, for example, power-consumption (more power is consumed if two or more receiver processing chains are used) and data stream quality may be taken into consideration for the decision of the receiver to decode a suitable number of low-quality streams.

Thus, embodiments of the invention provides for flexibility in broadcast systems. According to embodiments of the invention, the quality (e.g. bit rate) of a received data stream may be reasonably high even for situations without a high SNR. Furthermore, embodiments of the invention take full advantage of the powerfulness of future receivers.

Suppose, for example, that the total available bandwidth is 100 MHz, consisting of five 20 MHz wide sub-bands spread out in frequency. According to embodiments of the invention, a same video stream may be broadcast from different transmitters, each transmitting the video stream on a 20 MHz sub-band, the sub-bands differing between different transmitters, such that the video stream transmissions from the different transmitters are synchronized in time. The video stream may not be the only data transmitted. There may be other video streams as well as other services broadcast within the broadcast system. The video stream may be a high definition (HD) quality video stream.

According to embodiments of the invention, the video service may be received via any of the sub-bands provided that the sub-band can be received with high enough reliability. If two or more of the video stream transmissions can be received, the receiver may choose either to only demodulate the video stream transmission having the strongest signal or (if several receiver processing chains are available) receive and demodulate more than one of the video stream transmissions in order to improve robustness. If one of the sub-bands is received with a very high signal level (for instance, because the receiver is very close to the corresponding transmitter), the receiver may choose not to demodulate any video stream transmissions of other sub-bands. It is thus noticed that applications may be scalable in terms of quality according to embodiments of the invention.

To further exemplify, suppose that the video stream to be broadcast is encoded into I-frames and P-frames. An I-frame is a frame that contains all the information needed to decode a particular picture of the video stream, whereas a P-frame only contains the difference (delta) from the previous (I- or P-) frame. How often an I-frame occurs may depend on, for example, how often the scene changes in the film and how much movement there is in the scene. The resolution and the frame rate may depend on which capacity can be supported (capacity defined in e.g. kbits per second). In one example, the frame rate might be 15 frames per second (fps) and the resolution might be VGA (Video Graphics Array- 640x 480 pixels).

In some embodiments of the invention, the video stream is encoded for a frame rate that is higher than what will be transmitted from a single transmitter using a corresponding sub-band. The encoding may, for example, correspond to 25 fps, when the target frame rate for a single transmitter is only 5 fps. In that case, the encoding (video sub-stream composition) may have the following features:
- Each I-frame is transmitted on all sub-bands.
- The P-frames for the different sub-bands correspond to every fifth P-frame of the 25 fps rate video stream.
- The P-frames for the different sub-bands are self-contained. This may be achieved, for example, by letting the delta of a P-frame relate to the previous (I- or P-) frame transmitted on that sub-band, and not to the previous frame in the original 25 fps rate video stream.
- The P-frames for the different sub-bands are staggered, so that if the P-frames of all the five video sub-streams are put together, they will correspond to the video stream with frame rate 25 fps.

To continue this example at the receiver side, the receiver may determine how many of the five sub-band signals can and will be received. A limitation that may be considered in the determination might be the number of receiver processing chains in the receiver and how many of these receiver processing chains are currently available, supposing that one receiver processing chain is needed per sub-band. Another limitation that may be considered in the determination might be how many of the five sub-bands can be received with good enough reliability. Yet another limitation that may be considered is the power consumption of the receiver.

If only one of the five sub-bands can be properly received, a frame rate for the received video stream of 5 fps will result. If more than one sub-band can be received with sufficient signal reliability, then the frame rate of the received video stream may be increased (enhancing the viewing experience). In addition to increasing the frame rate, the robustness for the received I-frames may also be improved if more than one sub-band can be received, since the I-frames may then extracted from each of the received sub-streams. If, for example, I-frames from three sub-streams are received, a majority decision may be taken to enhance the robustness. Alternatively (and somewhat more complex), if the same coding is used on the different sub-streams, coded symbols might be combined prior to decoding of the error correcting code, for instance by means of Maximum Ratio Combining (MRC) or Equal Gain Combining (EGC).

In the above example, the quality of the different streams is reduced compared to the quality of the original stream in the sense that a lower frame rate is used for the sub-streams. It should be understood that this is merely an example and that different options for how to reduce the quality of the self-contained streams (yet allowing them to give a higher quality when combined) are still within the scope of the invention. When the broadcast data is video, another example way to produce self-contained sub-steams may be to send the sub-streams with a lower resolution than the original video stream (but possibly using the same frame rate).

In another embodiment of the invention, a similar procedure is employed, but instead of transmitting different sub-streams on different sub-bands (i.e. using different frequencies), different sub-streams are transmitted in different time-slots. In addition, the different sub-streams may or may not be transmitted from different transmitters. To further exemplify, suppose that data is transmitted in 25 time-slots per second. A time-slot may thus be 40 ms long, so if all time slots were received, the received data would correspond to a continuous data steam. A time-slot may alternatively be shorter, say in the order of 1 ms.

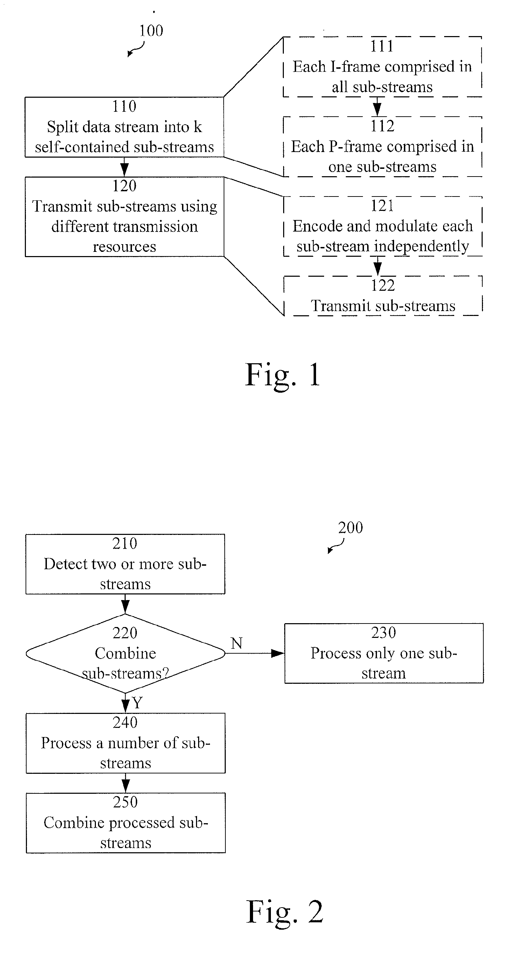

Figure 1 illustrates an example method 100 according to embodiments of the invention, which may, for example, be performed by a broadcast system.

In step 110, a data stream to be broadcast is split into k sub-streams, where k is two or more. The sub-streams may be of lower quality than the data stream as explained above. In some embodiments, the data stream is a video stream comprising I- and P-frames according to the example above, and step 110 comprises letting each I-frame take part in all of the sub-streams (optional sub-step 111) and letting each of the sub-streams comprise every k^{th} P-frame such that each P-frame is comprised in at least one of the sub-streams (optional sub-step 112).

In step 120, each of the sub-streams is transmitted (broadcast) using a transmission resource. The transmission resource used differs between at least two of the sub-streams and may differ between all of the sub-streams. As explained before, the transmission resource may comprise a carrier frequency or a time slot. The sub-streams may or may not be transmitted from different geographical sites. In some embodiments, each of the sub-streams is encoded and modulated independently of the other sub-streams (optional sub-step 121) and then transmitted (broadcast) as described above (optional sub-step 122).

Figure 2 illustrates an example method 200 according to embodiments of the invention, which may, for example, be performed by a receiver that can reside in a broadcast system. The broadcast system may, for example, perform method steps according to the method 100 described in connection to Figure 1.

In step 210, the receiver detects that two or more broadcast sub-streams can be received. In step 220, the receiver determines whether or not to combine two or more of the two or more sub-streams. The determination may take into consideration the capability of the receiver (e.g. how many receiver processing chains the receiver has), the availability of the receiver processing chains (i.e. if it is possible to use a particular receiver processing chain for the broadcast service or if it is occupied by another service or otherwise unsuitable for the task), the reception conditions experienced by the receiver (if one sub-stream is received with a very high signal strength it may be determined not to use any other sub-streams, if one or more sub-streams are received with a very low signal strength it may be determined not to use those sub-streams, etc), a desired data quality and/or a desired power consumption of the receiver (quality and power consumption may be subject to a trade-off situation as mentioned above).

If it is determined to use only one sub-stream (NO-path out of step 220), the process continues to step 230, where one sub-stream only (for example, the one with highest signal strength) is received and processed.

If, however, it is determined to use more than one sub-stream (YES-path out of step 220), the process continues to step 240, where the two or more sub-streams (for example, the ones with highest signal strength) are received and processed, each being processed using a separate receiver processing chain.

Then, the processed sub-streams are combined in step 250 to produce a combined data stream. Combination may comprise interlacing elements of each of the sub-streams. Alternatively or additionally, combination may comprise taking majority decisions and/or combining before decoding (e.g. using MRC) as explained above.

When several sub-streams are available for processing in a receiver, the receiver may choose a limited set of these sub-streams to process. The choice may be done such that the combined result can be expected to be as good as possible while involving a limited complexity. For example, if the receiver processes two out of five available sub-streams (which are transmitted in a staggered fashion as described above), the receiver may choose not use two adjacent (in time) sub-streams in order to obtain a frame sequence where variation of the length of the time intervals between the different frames is as small as possible.

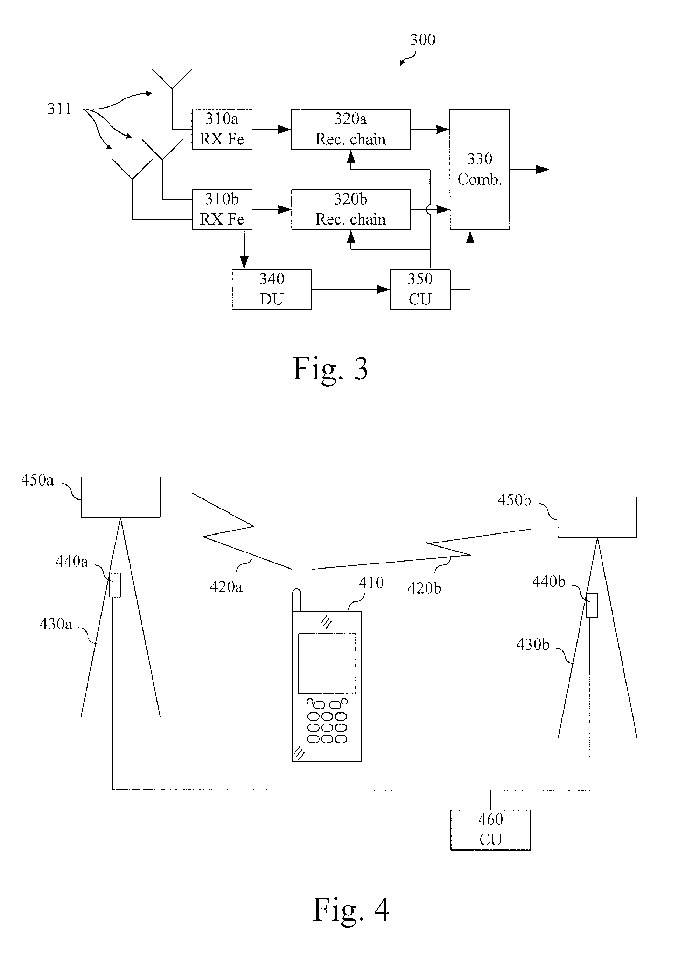

Figure 3 illustrates an example arrangement 300 according to embodiments of the invention. The arrangement 300 may, for example, be comprised in a receiver suitable for use in a broadcast system. The arrangement 300 may, for example, perform method steps according to the method 200 described in connection to Figure 2.

The arrangement 300 comprises one or more receiver front ends (RX Fe) 310a, 310b, which are adapted to receive one or more broadcast sub-streams via one or a plurality of antennas 311. The one or more receiver front ends 310a, 310b may, for example, be adapted to filter, down-convert, perform analogue-to-digital conversion and de-multiplex received signals.

The arrangement 300 further comprises two or more receiver processing chains (Rec. chain) 320a, 320b, each of which is adapted to process a broadcast sub-stream forwarded to the receiver processing chain by a receiver front end. The processing may, for example, comprise demodulating and decoding the sub-stream.

In some embodiments (as the one shown in Figure 3), the number of receiver front ends 310a, 310b equals the number of receiver processing chains 320a, 320b. This may be the case if, for example, the sub-streams are received through different frequency sub-bands. In other embodiments, the number of receiver front ends may be less than the number of receiver processing chains. For example, an arrangement may comprise only one receiver front end and two or more receiver processing chains. This may be the case if, for example, the sub-streams are received through different time slots.

The arrangement 300 also comprises a combining unit (Comb.) 330, a decision unit (DU) 340, and a control unit (CU) 350.

If more than one broadcast sub-stream is detected, the decision unit 340 is adapted to decide whether or not to combine two or more of the more than one sub-streams. Information regarding how many sub-streams are detected may, for example, be recovered from the one or more receiver front ends 310a, 310b. Alternatively, information regarding how many sub-streams are detected may be recovered by detection in the digital baseband, for instance by decoding relevant control information.

Similar to what was explained in connection to Figure 2, the decision unit 340 may take into consideration the capability of the receiver, the availability of the receiver processing chains, the reception conditions experienced by the receiver, a desired data quality and/or a desired power consumption of the receiver. The decision unit 340 forwards its decision to the control unit 350, which is adapted to control the operations of the receiver processing chains 320a, 320b, and the combining unit 330. If the decision was to combine two or more of the more than one sub-streams, the control unit 350 may assign a receiver processing chain to each of the two or more sub-streams and instructs the combining unit 330 to combine the result of the processing chains.

The combining unit 330 is adapted to combine the result of two or more of the processing chains. For example, the combining unit 330 may be adapted to interlace elements of the respective sub-streams and/or to take majority decisions regarding elements comprised in more than one of the sub-streams.

In some embodiments, an arrangement similar to that of Figure 3 may comprise a single receiver processing chain. If the different transmission resources used to transmit the different self-contained sub-streams are different time slots, an arrangement having a single receiver processing chain may suffice for the arrangement to be able to process two or more received sub-streams.

Figure 4 illustrates an example mobile terminal 410 connected, through radio links 420a, 420b, to a number of base station sites 430a, 430b. The base station sites each comprise at least one base station 440a, 440b and one or more antennas 450a, 450b. The mobile terminal 410 may comprise a receiver according to embodiments of the invention. The mobile terminal 410 may, for example, comprise an arrangement as described in connection to Figure 3.

The base station sites 430a, 430b are part of a wireless communication network having broadcast capabilities. The wireless communication network also comprises a control unit (CU) 460 connected to each of the base station sites 430a, 430b. The wireless communication network may comprise a system according to embodiments of the invention. The wireless communication network may, for example, perform method steps according to the method 100 described in connection to Figure 1. For example, the control unit 460 may be adapted to perform step 110 of Figure 1, and the base stations 440a, 440b may be adapted to perform step 120 of Figure 1.

The mobile terminal 410 is illustrated as a mobile telephone in a schematic front view. The mobile terminal may have an external or an internal antenna. The mobile terminal may even comprise multiple antennas. The mobile terminal may further comprise a display, a keypad, a loudspeaker, and a microphone, which together provides a man-machine interface for operating the mobile terminal.

The example mobile terminal 410 is adapted to connect to a mobile telecommunication network via the wireless links 420a, 420b to the radio base stations 440a, 440b. Hence, a user of the mobile terminal may use conventional circuit-switched telecommunication services such as voice calls, data calls, video calls, and fax transmissions, and/or packet-based services such as electronic messaging, VoIP, Internet browsing, electronic commerce, etc. To this end, the mobile terminal and the base stations may be compliant with at least one mobile telecommunication standard, for instance UMTS LTE. Further, the mobile terminal and the base stations may be compliant with at least one broadcast standard, for instance DVB-H or MBMS.

The described embodiments of the invention and their equivalents may be realised in software or hardware or a combination thereof. They may be performed by general-purpose circuits associated with or integral to a communication device, such as digital signal processors (DSP), central processing units (CPU), co-processor units, field-programmable gate arrays (FPGA) or other programmable hardware, or by specialized circuits such as for example application-specific integrated circuits (ASIC). All such forms are contemplated to be within the scope of the invention.

The invention may be embodied within an electronic apparatus comprising circuitry/logic or performing methods according to any of the embodiments of the invention. The electronic apparatus may, for example, be a portable or handheld mobile radio communication equipment, a mobile radio terminal, a mobile telephone, a communicator, an electronic organizer, a smartphone, a computer, a notebook, a plug-in card, an embedded drive, a mobile gaming device, a base station, or a wireless communication network.

According to some embodiments of the invention, a computer program product comprises a computer readable medium such as, for example, a diskette or a CD-ROM. The computer readable medium may have stored thereon a computer program comprising program instructions. The computer program may be loadable into a data-processing unit, which may, for example, be comprised in a mobile terminal. When loaded into the data-processing unit, the computer program may be stored in a memory associated with or integral to the data-processing unit. According to some embodiments, the computer program may, when loaded into and run by the data-processing unit, cause the data-processing unit to execute method steps according to, for example, the methods shown in any of the Figures 1 and 2.

The invention has been described herein with reference to various embodiments. However, a person skilled in the art would recognize numerous variations to the described embodiments that would still fall within the scope of the invention. For example, the method embodiments described herein describe example methods through method steps being performed in a certain order. However, it is recognized that these sequences of events may take place in another order without departing from the scope of the invention. Furthermore, some method steps may be performed in parallel even though they have been described as being performed in sequence.

In the same manner, it should be noted that in the description of embodiments of the invention, the partition of functional blocks into particular units is by no means limiting to the invention. Contrarily, these partitions are merely examples. Functional blocks described herein as one unit may be split into two or more units. In the same manner, functional blocks that are described herein as being implemented as two or more units may be implemented as a single unit without departing from the scope of the invention.

Hence, it should be understood that the limitations of the described embodiments are merely for illustrative purpose and by no means limiting. Instead, the scope of the invention is defined by the appended claims rather than by the description, and all variations that fall within the range of the claims are intended to be embraced therein.

## Claims

1. A method of broadcasting a data stream associated with a service, suitable for use in a wireless communication system, comprising:
splitting (110) the data stream into a plurality of different self-contained sub-streams; and
transmitting (120, 122) each of the sub-streams using a respective transmission resource, wherein a first transmission resource used to transmit a first of the sub-streams is different from a second transmission resource used to transmit a second of the sub-streams.

2. The method of claim 1, further comprising:
modulating and encoding (121) each of the sub-streams independently.

3. The method of any of claims 1 through 2, wherein the data stream has a first quality, each of the plurality of sub-streams has a sub-stream specific quality, and each of the sub-stream specific qualities is lower than the first quality.

4. The method of any of claims 1 through 3, wherein the first of the plurality of sub-streams is transmitted from a first broadcasting site and the second of the plurality of sub-streams is transmitted from a second broadcasting site, the first and second broadcasting sites being geographically separated.

5. The method of any of claims 1 through 4, wherein the respective transmission resources comprise at least one of a frequency range and a time slot.

6. The method of any of claims 1 through 5, further comprising synchronizing the plurality of sub-streams before transmission.

7. The method of any of claims 1 through 6, wherein the service is a video service and the data stream is a video stream comprising I-frames and P-frames, and wherein the step of splitting the data stream into the plurality of different self-contained sub-streams comprises:
letting each 1-frame be comprised in each of the sub-streams (111); and
letting each P-frame be comprised in only one of the sub-streams (112).

8. The method of any of claims 1 through 7, wherein the service is a video service and the data stream is a video stream having a first resolution, and wherein the step of splitting the data stream into the plurality of different self-contained sub-streams comprises letting each of the sub-streams have a sub-stream specific resolution wherein each of the sub-stream specific resolutions is lower than the first resolution.

9. A computer program product comprising a computer readable medium, having thereon a computer program comprising program instructions, the computer program being loadable into a data-processing unit and adapted to cause the data-processing unit to execute method steps according to any of claims 1 to 8 when the computer program is run by the data-processing unit.

10. A method, suitable for use in a wireless communication receiver, comprising:
receiving (210) two or more different self-contained sub-streams related to a same broadcast service; and
processing (240) two or more of the received two or more sub-streams and combining (250) the result.

11. The method of claim 10, further comprising:
determining (220) whether to combine sub-streams or not; and
processing (230) only one of the received two or more sub-streams if it is determined to not combine sub-streams; and
wherein the step of processing two or more of the received two or more sub-streams and combining the result is performed if it is determined to combine sub-streams.

12. The method of any of claims 10 through 11, wherein each of the plurality of sub-streams has a sub-stream specific quality, the combined data stream has a second quality, and each of the sub-stream specific qualities is lower than the second quality.

13. The method of any of claims 10 through 12, wherein each of the sub-streams are received through a respective transmission resource, the respective transmission resource comprising at least one of a frequency range and a time slot, and a first transmission resource through which a first of the sub-streams is received is different from a second transmission resource through which a second of the sub-streams is received.

14. The method of any of claims 10 through 13, wherein the step of combining two or more of the two or more sub-streams comprises interlacing elements of the two or more sub-streams.

15. The method of any of claims 10 through 14, further comprising determining the number of sub-streams of the received two or more sub-streams to be used in the step of processing and combining based on at least one of:
a receiver capability of the wireless communication receiver;
an availability of receiver processing chains of the wireless communication receiver;
reception conditions experienced by the wireless communication receiver;
a desired data quality; and
a desired power consumption of the wireless communication receiver.

16. A computer program product comprising a computer readable medium, having thereon a computer program comprising program instructions, the computer program being loadable into a data-processing unit and adapted to cause the data-processing unit to execute method steps according to any of claims 10 to 15 when the computer program is run by the data-processing unit.

17. A system for broadcasting a data stream associated with a service comprising:
a control unit (460) adapted to split the data stream into a plurality of different self-contained sub-streams; and
at least one transmitter (440a, 440b) each adapted to transmit at least one of the sub-streams using a respective transmission resource, wherein a first transmission resource used to transmit a first of the sub-streams is different from a second transmission resource used to transmit a second of the sub-streams.

18. The system of claim 17, wherein the at least one transmitter comprises at least a first transmitter of a first broadcasting site and a second transmitter of a second broadcasting site, the first and second broadcasting sites being geographically separated, and wherein the first transmitter is adapted to transmit the first of the plurality of sub-streams and the second transmitter is adapted to transmit the second of the plurality of sub-streams.

19. The system of any of claims 17 through 18, wherein the respective transmission resources comprise at least one of a frequency range and a time slot.

20. The system of any of claims 17 through 19, wherein the control unit is further adapted to synchronize the plurality of sub-streams.

21. The system of any of claims 17 through 20, wherein the service is a video service and the data stream is a video stream comprising I-frames and P-frames, and wherein the control unit is further adapted to:
let each I-frame be comprised in each of the sub-streams; and
let each P-frame be comprised in only one of the sub-streams.

22. The system of any of claims 17 through 21, wherein the service is a video service and the data stream is a video stream having a first resolution, and wherein the control unit is further adapted to let each of the sub-streams have a sub-stream specific resolution wherein each of the sub-stream specific resolutions is lower than the first resolution.

23. A receiver comprising:
one or more receiver front ends (310a, 310b) adapted to receive two or more different self-contained sub-streams related to a same broadcast service;
at least one processing chain (320a, 320b), each adapted to process at least one of the two or more sub-streams;
combining circuitry (330) adapted to combine two or more sub-streams to produce a combined data stream; and
a control unit (350) adapted to control operation of the at least one processing chain and the combining circuitry.

24. The receiver of claim 23, wherein the at least one processing chain comprises at least two processing chains, each adapted to process one of the two or more sub-streams.

25. The receiver of any of claims 23 through 24, further comprising:
decision circuitry (340) adapted to determine whether to combine sub-streams or not; and
wherein the control unit is adapted to control operation of the at least one processing chain and the combining circuitry in response to a decision by the decision circuitry.

26. The receiver of any of claims 23 through 25, wherein each of the plurality of sub-streams has a sub-stream specific quality, the combined data stream has a second quality, and each of the sub-stream specific qualities is lower than the second quality.

27. The receiver of any of claims 23 through 26, wherein the one or more receiver front ends is adapted to receive each of the sub-streams through a respective transmission resource, the respective transmission resource comprising at least one of a frequency range and a time slot, and a first transmission resource through which a first of the sub-streams is received is different from a second transmission resource through which a second of the sub-streams is received.

28. The receiver of any of claims 23 through 27, wherein the combining circuitry is further adapted to interlace elements of the two or more sub-streams.

29. The receiver of any of claims 23 through 28, wherein the decision circuitry is adapted to determine the number of sub-streams of the received two or more sub-streams to be processed by the at least one processing chain and combined by the combining circuitry based on at least one of:
a receiver capability of the wireless communication receiver;
an availability of processing chains of the wireless communication receiver;
reception conditions experienced by the wireless communication receiver;
a desired data quality; and
a desired power consumption of the wireless communication receiver.

30. An electronic apparatus (410) comprising the receiver according to any of claims 23 through 29.
